# EUROPEAN PATENT APPLICATION

(11) **EP 1 410 844 A1**
(43) Date of publication of application: **21.04.2004**
(21) Application number: 02356201.0
(22) Date of filing: 15.10.2002
(51) Int. Cl.: B01J 21/12, B01J 23/40, C07C 2/00

(54) **Silicon-based porous catalytic system for oligomerising light olefins**

(71) Applicant: CENTRE NATIONAL DE LA RECHERCHE SCIENTIFIQUE (CNRS), 75794 Paris Cedex 16 (FR); Université Montpellier II, 34095 Montpellier Cedex 05 (FR); SNAMPROGETTI S.p.A., 20097 San Donato Milanese (Milano) (IT); Consorzio Interuniversitario Nazionale Per La Scienza E Tecnologia Dei Materiali (INSTM), 50132 Firenze (IT); REPSOL YPF S.A., 28046 Madrid (ES)
(72) Inventor: Roziere, Jacques, 34090 Montpellier (FR); Jones, Déborah, 34090 Montpellier (FR); Jacquin, Mélanie, 34170 Castelau-le-Lez (FR); Rossini, Stefano, 20142 Milano (IT); Catani, Roberto, 20138 Milano (IT); Vaccari, Angelo, 40127 Bologna (IT); Lenarda, Maurizio, S. Elena, 30100 Venezia (IT); Busca, Guido, 16143 Genova (IT); Jimenez-Lopez, Antonio, Granada (ES); Rodriguez-Castellon, Enrique, 29130 Malaga (ES); Maireles-Torres, Pedro, 29009 Malaga (ES); Trejo-Menayo, José-Manuel, 28028 Madrid (ES)
(74) Representative: Colombet, Alain André

(57) **Abstract**

The present invention relates to the use of a silicon-based porous catalytic system for oligomerising light olefins said porous silicon-based catalytic system having an average pore diameter of between about 1 nm and about 5 nm and an acidity level of between about 150 µmol/g and about 650 µmol/g, and prepared from at least one hydrolysable silicon-based compound, or other source of silicon, and at least one non-ionic surface active agent.
The invention also relates to a process for oligomerising light olefins using said silicon-based porous catalytic system, and to certain silicon-based porous catalytic systems.

## Description

The present invention relates to the use of a silicon-based porous catalytic system for oligomerising light olefins, to a process for oligomerising light olefins using said silicon-based porous catalytic system, and to certain silicon-based porous catalytic systems.

Light olefin oligomerisation reaction is a complex reaction that needs a perfect control of the operating conditions, such as temperature, pressure, and space velocity, in order to obtain a suitable yield of the desired oligomer fractions, such as dimers, trimers or tetramers for example. This reaction requires acidic catalysts of the Brønsted or Lewis type, and among them zeolite-type catalysts and "solid phosphoric acid" catalysts have been widely studied.

Oligomerisation of light olefins is today widely used on an industrial scale for the production of petrochemical products and various fuels (see O'Connor et al., *Catalysis Today,* **6,** (1990), 329 sqq, Olah et al., *Hydrocarbon Chemistry,* (1995), Wiley, New York). Such synthetic products and fuels present the advantages of being almost free of heteroatoms and aromatic compounds, and of possibly leading to paraffins, comprising gasoline, diesel gas oil, and jet-fuels such as kerosene.

Catalytic conversion of raw products, such as light olefins (i.e. mixtures of C₂-C₅ olefins), may yield the C₁₀-C₂₀ low-branched paraffins, which belong to the diesel gas oil components. However, this oligomerisation reaction is relatively complex and the operating conditions (temperature, pressure, and overall contact time) need be carefully controlled in order to obtain significant quantitative and qualitative yields.

This complexity may be illustrated by the great number of different oligomerisation technologies that have already been proposed for example in US patents no. 4,150,062 and no. 4,227,992. Other publications and patents disclose a wide variety of acido-basic materials or compounds that are able to catalyse such a reaction, see for example McMahon et al., *Adv. Petr. Chem.,* ***VII***, (1963), 285 sqq., and patents US 5,134,241, US 5,134,242, US 5,134,243, and US 5,260,201. However these catalysts are generally responsible for the low selectivity in the oligomerisation reactions for the production of gas-oil fractions.

One of the factors which might be responsible for such low selectivity is that zeolite-type catalysts used in the light olefin oligomerisation reactions are of too low pore dimension and too high acidity, giving a broad product range and insufficient per-pass selectivity to diesel. For olefin oligomerisation, modulation of the surface acidity of the catalyst is a key factor: a certain acidity is essential for the catalytic reaction but if too high will lead to highly branched structures, which are of low Cetane Number (CN).

Non published European application EP-02290241.5 discloses silicon-based multifunctional catalytic systems useful in the hydrogenation and/or decyclisation reactions of (poly)aromatic compounds. These multifunctional catalytic systems are prepared from a silicon source component and a surface-active agent, and comprise one or more catalytic material(s), e.g. chosen from among metallic elements of columns 8, 9 and 10 of the periodic table of the elements. It has now surprisingly been found that some of these multifunctional catalytic systems may be useful for the oligomerisation reactions encompassed within the present description.

Therefore, a first objective of the present invention is to provide a new use of porous silicon-based catalytic systems for the conversion of light olefins into low-branched oligomer paraffins, with a high conversion rate.

A second objective of the present invention is to provide a new use of porous silicon-based catalytic systems for the conversion of light olefins into low-branched oligomer paraffins with a high selectivity.

A further objective consists of providing a new use of porous silicon-based catalytic systems for the conversion of light olefins into low-branched oligomer paraffins that are substantially free from heteroelements and substantially free of (hetero)aromatic compounds.

According to a further objective of the invention, a new use of porous silicon-based catalytic systems for the conversion of light olefins into low-branched oligomer paraffins is provided, wherein the oligomer paraffins are substantially free from compounds of sulphur and compounds or nitrogen and their derivatives.

Still another objective of the present invention is to provide a new use of porous silicon-based catalytic systems for the conversion of light olefins into low-branched oligomer paraffins substantially free from heteroelements, from (hetero)aromatic compounds, and from compounds and derivatives of sulphur and nitrogen, with a high conversion rate, with a high selectivity, wherein the oligomer paraffins are paraffins belonging to the C₁₀-C₂₀ diesel fraction.

Another objective of the present invention is to provide a new use of porous silicon-based catalytic systems for the preparation of low-branched paraffins belonging to the C₁₀-C₂₀ diesel fraction, thereby resulting in a diesel fuel having a high Cetane Number.

It has now been surprisingly discovered that the above objectives may be met in whole or in part by the porous silicon-based catalytic systems according to the present invention.

More precisely, the present invention relates to the use of a porous silicon-based catalytic system for the conversion of a light olefin feedstock into oligomer paraffins, especially into oligomer paraffins belonging to the diesel fractions (boiling point 180-350 °C), having from about 10 to about 20 carbon atoms, characterised in that said porous silicon-based catalytic system has an average pore diameter of between about 1 nm and about 5 nm and an acidity level of between about 150 µmol/g and about 650 µmol/g, and prepared from at least one hydrolysable silicon-based compound, or other source of silicon, and at least one non-ionic surface active agent.

The structure of the catalytic systems useful for the above-described olefin oligomerisation reactions is characterised by a narrow distribution of pores as indicated by a full width at half maximum in the pore size distribution of 1 nm to 1.5 nm, and presenting at least a certain degree of organisation in general shown by the presence of at least one low-angle X-ray diffraction peak. "Low angle", in the present context, means a diffraction peak at a position corresponding to a d-spacing of 3 nm to 10 nm, preferably between 3 nm and 6 nm, and more preferably between 3.5 nm and 5 nm.

These catalytic systems are generally prepared by adding a hydrolysable silicon-containing compound, or other source of silicon, to a solution of one or more non-ionic surface active agent(s) in an appropriate concentration, optionally comprising another metallic- or non-metallic-containing compound to provide hetero-atom doped, partially substituted silica, and optionally one or more organic or inorganic additive(s) and adjusting the pH to an appropriate value. The obtained solution may optionally be placed under vacuum until a gel is obtained or, alternatively, the precipitate formed is stirred. The obtained gel or precipitate is optionally submitted to hydrothermal treatment, and then dried. Finally the surface-active agent is removed so that a catalytic support is obtained.

The use of non-ionic surface active agents during the preparation of the support allows a control of the porosity of the resulting catalytic system. One or more non-ionic surface active agents may be used for the preparation of the above described catalytic supports and may be of all types known by the skilled artisan in the art.

As compared to ionic, i.e. anionic and cationic surface-active agents, the advantage of using non ionic surface-active agents is that they are much more easily removed from the catalytic system. Moreover, the catalytic system may be more easily obtained in a monolithic form, rather than a precipitate, said precipitate requiring further steps of recovering and shaping. All the above advantages clearly show that non-ionic surface-active agents are best suitable for the preparation of catalytic systems useful for the oligomerisation process of the invention.

Such non-ionic surface-active agents are for example chosen from all known non-ionic surface active agents, and from all known monomeric, oligomeric and polymeric surface active agents. Mixtures of surface-active agents of one type or of different types may also be used in the process according to the invention.

Examples of known non-ionic surface active agents include natural and synthetic agents, e.g. alkyl-poly(oxyethylene) glycols, and are for example Tergitol 15-S-9, Tergitol 15-S-12 (Sigma), Brij 30, Brij 52, Brij 56 (Aldrich Chemicals), Simulsol P8, Simulsol 575, Simulsol 830, Simulsol 1230, Montanox 20, Montanox 80, Montanox 85, Octarox 1030, dodecylphenol PEO4, dodecylphenol PEO 5, dodecylphenol PEO 7, dodecylphenol PEO 10 (Seppic), poly(ethylene glycol)-block-poly(propylene glycol)-block-poly(ethylene glycol) block co-polymers, such as Pluronic 123 (Aldrich Chemicals).

The nature of the non-ionic surface-active agent used in the preparation process of the catalytic system allows a perfect control of the porosity of the porous material. Depending on the size and the respective dimensions of the hydrophobic and hydrophilic parts of the surface-active agent, the size of the pores of the catalytic support can be finely tuned.

The use of surface-active agents also allows the dispersion into the reaction mixture of metallic salts or metallic complexes, thereby facilitating the incorporation, within the framework or the porous structure of the porous material, of hetero-elements, such as those of groups 8, 9, and 10 of the periodic table of the elements.

The surface active agent may advantageously be dissolved in an acidic medium prior to the addition of the silicon-containing compound. Examples of appropriate acidic media include strong mineral acids, preferably hydrochloric, sulphuric and nitric acid, more preferably nitric acid of various concentrations in water, for example about 0.1 M.

The concentration of the surface active agent in solution is advantageously greater than about 20 % by weight, preferably greater than about 30 %, and generally between about 30 % and 60 % by weight.

To this surface active agent solution is added an amount of a hydrolysable compound containing silicon. This compound is actually a source of silicon, which can be easily released into the surface active agent solution. A good example of hydrolysable silicon-containing compound is tetraethoxysilane (TEOS) or tetramethoxysilane (TMOS). Other source or mixtures of different sources of silicon may of course also be used.

If desired, and where appropriate, the porous catalytic support may comprise, beside silicon, one or more other metallic or non-metallic elements (referenced as "S" in the following), such as aluminium, zirconium, boron, phosphorus and the like. Such porous materials comprising silicon and one or more S element include for example aluminosilicate, zirconiosilicate, borosilicate, phosphosilicate, phosphoaluminosilicate, boro-aluminosilicate and zirconio-aluminosilicate based materials.

Such other element(s) are added (preferably before the addition of the silicon containing compound) to the surface-active agent as inorganic salts, generally in a hydrate form, e.g. those of aluminium trinitrate (Al(NO₃)₃), zirconyl nitrate (ZrO(NO₃)₂), zirconyl chloride (ZrOCl₂) or organometallic compounds, e.g. zirconium tetrapropoxide, boron methoxide, boron ethoxide, or in solid acid form, e. g. boric acid (H₃BO₃) or liquid form, e. g. phosphoric acid.

Preferred catalytic supports useful for the oligomerisation reaction of the present invention comprise, beside silicon, one or more other metallic or non-metallic elements chosen from aluminium, zirconium, and boron, and include for example aluminosilicates, borosilicates, zirconio-aluminosilicates and boro-aluminosilicates.

Respective quantities of silicon-source compound and S-source compound (where S represents a metallic or non-metallic element, for example aluminium, zirconium, boron, phosphorus and the like) are such that, in the catalytic support, the molar ratio Si/S has a value of between about 1 and about 100, preferably of between about 2 and about 50. For a catalytic support comprising silicon and aluminium, this ratio is generally comprised between about 5 and about 40, preferably about 10 and about 20, for example about 15.

When the catalytic supports contain silicon and aluminium and boron, the ratio between silicon and boron is generally comprised between about 20 and about 250, preferably about 50 and about 200, the ratio between silicon and aluminium being as defined above. When the catalytic supports contain silicon and aluminium and zirconium, the ratio between silicon and zirconium is generally comprised between about 100 and about 10, for example about 50, the ratio between silicon and aluminium being as defined above.

The Si/S molar ratio, as well as the respective distribution and localisation of the Si and S atoms have a direct impact on the acidity of the catalytic system. This ratio may thus be adjusted to the desired acidity level suitable for the process of oligomerisation of light olefins into oligomer paraffins, according to the present invention.

The acidity level of the catalytic system may be assessed by different methods known to those skilled in the art. In the present invention, the acidity level is defined by the number of acid sites (surface acidity), and is measured by ammonia (NH₃) chemisorption, i.e. corresponds to the number of micro-moles (µmol) of ammonia that are chemically adsorbed per gram of catalyst. The chemisorption method is described in, for example, *Analytical Methods in Fine Particle Technology*, P.A. Webb and C. Orr, Micromeritics Instrumentation Corp. Norcross, USA, (1997), Ch. 6, and the use of the method to evaluate surface acidity is described in, for example, A. Auroux, "Thermal Methods: Calorimetry, Differential Thermal Analysis and Thermogravimetry", Ch. 22 in Catalyst Characterization. Physical Methods for Solid Materials, Eds. B. Imelik, J. C. Vedrine, Plenum Press, (1994), 642-645, or in D. Jones, G. Aptel, M. Brandhorst, M. Jacquin, J. Jiménez-Jiménez, A. Jiménez-López, P. Maireles-Torres, I. Piwonski, E. Rodríguez-Castellón, J. Zajac and J. Rozière, *J. Mater. Chem*., (2000), ***10***, 1957-1963. Preferred acidity levels of the catalytic systems suitable for the process according to the present invention are comprised within the range of 150 µmol/g and 650 µmol/g, more preferably between 250 µmol/g and 550 µmol/g, even more preferably between about 300 µmol/g and about 500 µmol/g.

As regards the control of the porosity of the end product porous material, it may also be useful to add to the solution, one or more organic and/or inorganic additives. Organic additives include for example 1,3,5-trimethylbenzene and 1,3,5-triethylbenzene. As inorganic additives, it may be cited inorganic salts, such as for example lithium nitrate. Organic and/or inorganic additives may be added to the surface active agent solution before or after the addition of the silicon containing compound. Organic additives are advantageously added before the silicon containing compounds; the inorganic additives are preferably added after the silicon containing compound.

Another important factor on which depends the porosity of the porous support is the reaction temperature used for the preparation of said support. This temperature is generally comprised between about 20 °C and about 150 °C, preferably between about 20 °C and 80 °C, for example 25 °C.

The obtained mixture is then optionally placed into a hermetic vessel, to which a dynamic vacuum is applied during a sufficient period, allowing the elimination of volatile compounds that are formed during the reaction, e.g. during a period ranging from 30 to 240 min., preferably 90 to 180 min. Vacuum is preferably maintained until a solid product is obtained, generally in the form of a gel.

The obtained solid product, in the form of a gel or a solid powder, is then optionally hydrothermally treated, at a temperature preferably comprised in the range of 80 °C to 130 °C, for example 100 °C, for up to 1 week, preferably for about 24 to 72 hours, for example 48h.

The gel is then dried at appropriate temperature and during a sufficient period of time so that, preferably, a transparent, auto supported, monolithic block is obtained. For example, temperatures of between 15 °C and 80 °C and/or periods of time of about 2 to 5 days, preferably about 3 days, are satisfactory.

The surface active agents may be eliminated from the pores of the structure either by thermal or chemical way. In the first case (thermal removal), the surface-active agent is gradually expelled from the pores as the support is progressively heated. For example, the material is placed into an oven, which is progressively heated (e.g. about 0.5 °C to 5 °C per minute, e.g. 2 °C per minute), until a temperature of between 400 °C and 700 °C is reached, preferably between 450 °C and 650 °C, for example 560 °C, the temperature of the oven being maintained until the complete elimination of the surface active agent.

By chemical extraction is meant that the surface active agent is run into an appropriate solvent, such as ethanol, but another solvent or mixtures or solvents may also be used. This extraction may be realised between room temperature and the boiling point of the solvent. Preferably, the material is covered with ethanol and shaken until the totality of the surface active agent is extracted by the solvent. Shaking may thus be maintained during from 2 to 24 hours, for example, 12 hours. It may also be useful to add more solvent, for example every 2 hours.

The above described preparation methods generally lead to the formation of monolithic, film or powder porous materials, preferably monolithic porous materials. In this latter case the catalytic supports are directly obtained in the desired and appropriate form usable in the catalytic reactions, thus avoiding any further shaping.

Catalytic material(s), such as catalytic metals may eventually be intimately admixed to the above-described catalytic systems. It is thus possible, although not compulsory, to intimately admix one or more metals, preferentially of the groups 8, 9 and 10 of the periodic classification of the elements into the catalytic support. This operation is performed while the hydrolysable silicon-containing compound, or other source of silicon, is added to the solution or just before the non-ionic surface-active agent is removed.

This operation may be achieved by various methods including ionic exchange, incorporation, impregnation, adsorption and the like. Depending on the method, the catalytic material(s) may be added to the support during its preparation, or once the catalytic support is formed and is substantially free of remaining surface-active agent.

Such catalytic material(s) include for example metal(s) that are conveniently used in catalytic reactions. These metals are advantageously chosen from groups 8, 9 and 10 of the periodic classification of the elements. Preferably, appropriate metals are chosen from iron, nickel, rhodium, and platinum. Preferred metals include nickel, rhodium, and platinum, more preferably rhodium and platinum. One or more metals can be present in the catalytic system, for example mixtures of platinum and rhodium (Pt/Rh). Molar ratios of catalytic metals may vary to a great extent, although molar ratios of Rh/Pt comprised between 1:10 and 10:1 are advantageously used. For example, Rh/Pt molar ratios of about 1:1 to about 5:1 are preferred. Rh/Pt molar ratios of about 3:1 gave particularly good results.

Various methods known in the art may be used for intimately combining the support and the catalytic component(s). Among them, the three following are preferred: ionic exchange, direct incorporation and impregnation although other known methods may be adapted.

The first method (ionic exchange) uses the capacity of the material to exchange ions which are introduced by the partial substitution of silicon by hetero elements, that is to say, ionic exchange with metal cations or complexed metal cations of formula [M(NH₃)₅Cl]²⁺, or M(NH₃)₄²⁺, for example, in which M represents a metal chosen from the elements of groups 8, 9 and 10 of the periodic classification of the elements.

The second method (direct incorporation) is advantageously used with supports prepared with non-ionic surface active agents. This method indeed takes benefits from the dispersion properties of these non-ionic surface active agents towards metallic salts or metal complexes such as pentanedionate (acetyl acetonate), nitrate, and chloride. The end product catalytic system (catalytic support and metals dispersed therein) is obtained in a one step reaction.

The third method is based on the impregnation of metallic salts, for example using solutions of metallic chlorides or nitrates. Other known methods in the art useful for intimately admixing the catalytic metal or metals with the support may also be used.

The total amount of metal(s) is advantageously comprised between 0.01 % and 10 % by weight of the porous support, preferably between 0.05 % and 5 % by weight, and more preferably between 0.1 % and 2 % by weight.

The obtained catalytic systems, whether or not they further comprise one or more catalytic material(s) as defined above, may finally be calcined, for example in an oven, e.g. at a temperature of about 400 °C to about 600 °C, and/or during about 1 to 6 hours.

It should be also underlined that these catalysts, whether or not they further comprise one or more catalytic material(s) as defined above, are stable to regeneration at 550 °C, which is of economical importance when used on an industrial scale. Regeneration may be performed according to known methods, and particularly under oxidising conditions, such as air for example.

Preferably, the catalytic systems useful for the conversion of light olefin feedstock into oligomer paraffins comprise an aluminosilicate-based porous catalytic support, prepared with a non-ionic surface-active agent, and optionally at least one catalytic material with one or more of the following characteristics taken alone or in combination:
- the Si/Al molar ratio is comprised between about 5 and about 40, preferably about 10 and about 20, for example about 15;
- the average diameter of the pores has a value from about 1 nm to about 5 nm;
- the catalytic material optionally comprises one or more metals chosen from platinum and rhodium, alone or in mixtures, in an overall amount of between 0.01 % and 10 % by weight, preferably between 0.5 % and 5 % by weight, and more preferably between 0.1 % and 2 % by weight of the catalytic support.

For the use of the present invention, particularly preferred catalytic systems are those prepared using a non-ionic surface-active agent, and comprising an aluminosilicate support having a Si/Al molar ratio of about 15, and optionally platinum or rhodium or a mixture platinum/rhodium, the overall content of metal being about 0.2 % by weight of the catalytic support.

Among the above described catalytic systems useful for the conversion of light olefin feedstock into oligomer paraffins, porous silicon-based catalytic systems not comprising any further catalytic material, such as catalytic metal, e.g. chosen from among groups 8, 9 and 10 of the periodic classification of the elements, are novel and are part of the invention.

Therefore, and according to a further aspect, the present invention also relates to a new porous silicon-based catalytic system substantially free from catalytic metal, such as those of groups 8, 9 and 10 of the periodic classification of the elements, and having an average pore diameter comprised between about 1 nm and about 5 nm, an acidity level of between about 150 µmol/g and about 650 µmol/g, and prepared from at least one hydrolysable silicon-based compound, or other source of silicon, and at least one non-ionic surface active agent.

Preferred catalytic systems according to the present invention and possessing the above described characteristics include those consisting essentially of aluminosilicates, borosilicates, zirconio-aluminosilicates or boro-aluminosilicates. Among these preferred catalytic systems, aluminosilicates having a Si/Al molar ratio comprised between about 5 and about 40, preferably about 10 and about 20, for example about 15, are most preferred.

The present invention more specifically relates to a porous aluminosilicate catalytic system, substantially free from catalytic metal, such as those of groups 8, 9 and 10 of the periodic classification of the elements, with the following characteristics:
a. the average pore diameter is comprised between about 1 nm and about 5 nm;
b. the acidity level is comprised between about 300 µmol/g and about 500 µmol/g;
c. the Si/Al molar ratio is of about 15;
d. the preparation of which involves at least one hydrolysable silicon-based compound, or other source of silicon, and at least one non-ionic surface active agent.

According to a further aspect, the present invention also relates to a process for the conversion of a light olefin feedstock into oligomer paraffins, especially into oligomer paraffins belonging to the diesel fractions (boiling point 180-350 °C), having from about 10 to about 20 carbon atoms, characterised in that it comprises the following reaction steps:
a) said olefin feedstock is contacted with a porous silicon-based catalytic system having an average pore diameter of between about 1 nm and about 5 nm and an acidity level of between about 150 µmol/g and about 650 µmol/g, and prepared from at least one hydrolysable silicon-based compound, or other source of silicon, and at least one non-ionic surface active agent;
b) the reaction is run at a temperature ranging from about 100 °C to about 350 °C, and at a pressure comprised between about 0.5 MPa and about 7 MPa;
c) the final products are removed from the reaction medium and collected.

More specifically, the above described process uses one catalytic system as defined above in the present description, which is herein incorporated by reference.

Light olefin feedstock that may be used in the oligomerisation process of the present invention comprises alkenes or mixtures of alkenes, in all proportions, chosen from among C₂-C₆ alkenes or any olefin-comprising hydrocarbon mixtures, e.g. refinery cuts, feedstocks from dehydrogenation processes, etc. Examples of such alkenes include ethene, propene, butenes (i.e. all linear or branched butene isomers: 1-butene, 2-butene, 2-methylpropene), pentenes (all linear or branched isomers) and hexenes (all linear or branched isomers).

For the preparation of diesel gas oil, C₄ and C₅ alkenes may advantageously be used, rather than propene and ethene, which are usually involved in the production of highly valuable polymers. C₄ and C₅ alkenes are for example easily available as compounds that are removed from gasoline during its reformulation.

Light olefin feedstock may also contain a number of other organic compounds such as lower alkanes (e.g. butane), inorganic compounds, impurities, etc...

The reaction temperature of the process of the present invention is advantageously comprised between 100 °C and 350 °C, although higher or lower temperatures may be convenient. Preferably the process according to the present invention is conducted at a temperature of between 150 °C and 300 °C, more preferably between about 200 °C and about 250 °C. Reaction temperature of about 200 °C provided high conversion and high selectivity to the diesel fraction.

Linked to the reaction temperature, the reaction pressure may range between 0.5 MPa and 7 MPa, preferably about 5 MPa. Reaction pressure of about 5 MPa also provided good performance in terms of conversion and selectivity.

When involved in light olefin oligomerisation reactions of the invention, the above described catalytic systems, as compared with known porous catalytic systems, allow reactions with higher efficiency and higher selectivity. It has indeed been surprisingly found that oligomerisation reactions conducted with aluminosilicate catalysts (with varying Si/Al ratios) led to conversion rates as high as 99 % and more, with selectivity in C₁₀-C₂₀ alkanes about or greater than 65 %.

The mixtures of oligomers obtained by the process of the present invention comprise mixtures of low-branched C₁₀-C₂₀ paraffins and are characterised by a Cetane Number (CN) not lower than 43, and even greater than 50, thereby advantageously leading to C₁₀-C₂₀ diesel fraction compounds. Such diesel fractions compounds obtained by the process of the present invention may be used alone or as a component of diesel gas-oil of improved quality, especially with increased Cetane Number. Such diesel fractions compounds are also part of the present invention.

The present invention is further explained and described in the following examples, which in no way bring any limitation but rather illustrate the various aspects of the invention.

### Catalyst preparations

Non-ionic surface active agent, such as Tergitol 15-S-9 or Brij 30 (50 g) is dissolved into 50 g of 0.1 M nitric acid. Tetraethoxysilane (TEOS, 0.25 moles per mole of water present in the solution) is added and the solution is maintained under agitation until complete dissolution of tetraethoxysilane. Aluminium nitrate (Al(NO₃)₃.9H₂O) is added prior to TEOS. The amount of Al(NO₃)₃.9H₂O is such that the desired molar ratio Si/Al is obtained. Where appropriate, lithium nitrate may also be added prior to TEOS. The reaction mixture is placed under dynamic vacuum during 90 to 180 min., in order to withdraw the ethanol formed during TEOS hydrolysis. Vacuum is maintained until solidification of the mixture and a gel is obtained. The gel is then dried at a temperature of between 15 °C and 80 °C during about 2 to 5 days, and preferably during 3 days. The obtained material is a monolithic block-shaped transparent material.

Surface active agent is then eliminated by calcination in air using a heating rate of 1 °C/min up to 560 °C followed by hydrothermal treatment at this temperature for 10 h.

Where applicable, platinum and/or rhodium (in the form of solution of platinum(II) 2,4-pentanedionate and rhodium nitrate (Rh(NO₃)₃) respectively) is added to the mixture formed by TEOS, aluminium nitrate, non-ionic surfactant and dilute nitric acid. The amount of platinum solution and/or rhodium solution is fixed according to the sought overall content in metals.

According to the previous procedure, the following catalysts are obtained:

**-- Table I: --**

| Catalysts | | | | | |
|---|---|---|---|---|---|
| ***Catalyst*** | ***Si*/*Al ratio*** | ***Noble Metal (% by weight)*** | ***Number of acid sites (µmole NH***_{***3***}**/*g)*** | ***BET Surface area (m***^{***2***}***g***^{***-1***}***)*** | ***Average pore diameter (nm)*** |
| SiAl10 | 10 | - | 405 | 957 | 2.6 |
| SiAl15 | 15 | - | 360 | 950 | 2.6 |
| SiAl20 | 20 | - | 296 | 999 | 2.6 |
| SiAl30 | 30 | - | 252 | 1159 | 2.7 |
| Pt-SiAl15 | 15 | Platinum (0.2 %) | | 1050 | 2.6 |
| Pt-SiAl30 | 30 | Platinum (0.2 %) | | 1086 | 2.6 |
| Rh-SiAl15 | 15 | Rhodium (0.2 %) | 485 | 811 | 1.7 |
| PtRh-SiAl15 | 15 | Rhodium/Platinum(3/1)^{a} (0.2 %) | 443 | 570 | 1.7 |
| PtRh-SiAI20 | 20 | Rhodium/Platinum (3/1)^{a} (0.2 %) | | 630 | 1.7 |
| PtRh-SiAl30 | 30 | Rhodium/Platinum (3/1)^{a} (0.2 %) | | 722 | 1.7 |

| | | | | | |
|---|---|---|---|---|---|
| ^{a} molar ratio | | | | | |

### Oligomerisation examples

Tests are run in a stainless steel reactor (internal diameter 12 mm) equipped with a heating device and inlet pipes for air, nitrogen, and liquid and gaseous feedstock. Catalyst samples are sieved monolithic blocks having an average diameter size comprised between 0.71 mm and 0.85 mm. About 4 cm³ catalyst are introduced into the reactor. The pressure inside the reactor is controlled by a pneumatic gauge to a maximum of 6 MPa.

The reaction products are collected and directly analysed (for the volatile ones) by gas phase chromatography (GPC), or condensed and analysed off-line. The various retention time intervals of the reaction products are compared with calibration curves obtained from pure C₅-C₂₀ paraffin mixtures.

All catalysts of Table I are tested in an oligomerisation reaction of 1-butene/butane mixture (80/20 volume ratio) at a pressure of 5 MPa. For each catalyst, 4 different tests are conducted: 2 at 200 °C, a third one at 250 °C and a last one at 200 °C. Between each test, the catalyst is regenerated at a temperature of 500 °C in an oxidising medium (air).

Each experiment is run for 320 minutes. Samples of formed products are collected after 130 min and 320 min.

**Figure I** presents, for each tested catalyst, the percentage of conversion (first left light-grey bar), the percentage of selectivity in C₁₀-C₂₀ fraction (second right light-grey bar), and the percentage of selectivity in C₈ dimer (dark-grey bar).

For all tested catalysts, the activity at 200 °C is very high with more than 95 % in 1-butene conversion and a selectivity of more than 60 % for the C₁₀-C₂₀ fraction. Among the other reaction products, the dimer (C₈) represents 20 % to 25 % of the total amount of the formed products.

The reaction products are free from aromatic compounds, sulphur and nitrogen containing compounds.

A comparative experiment demonstrated that under the same conditions, the catalysts of the present invention are more active than a pentasil type zeolite catalyst that is used in commercial oligomerisation processes. Also cost of production is lower.

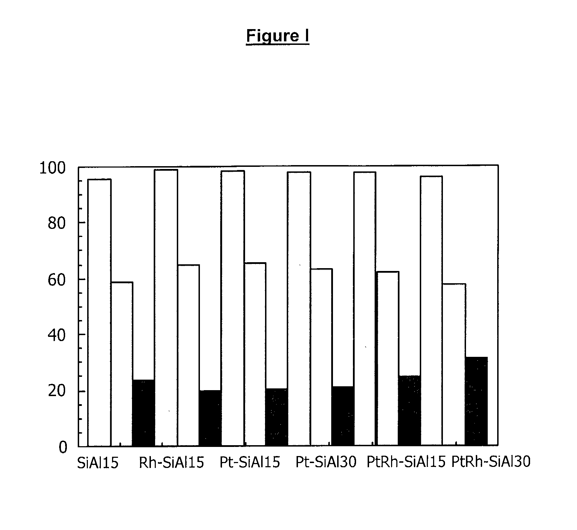

## Claims

1. Use of a porous silicon-based catalytic system for the conversion of a light olefin feedstock into oligomer paraffins, having from about 10 to about 20 carbon atoms, **characterised in that** said porous silicon-based catalytic system has an average pore diameter of between about 1 nm and about 5 nm and an acidity level of between about 150 µmol/g and about 650 µmol/g, and prepared from at least one hydrolysable silicon-based compound, or other source of silicon, and at least one non-ionic surface active agent.

2. Use according to claim 1, for the conversion of a light olefin feedstock into oligomer paraffins belonging to the diesel fractions (boiling point 180-350 °C).

3. Use according to any of the preceding claims, **characterised in that** the porous silicon-based catalytic system is chosen from aluminosilicate, zirconiosilicate, borosilicate, phosphosilicate, phosphoaluminosilicate, boro-aluminosilicate and zirconio-aluminosilicate based materials.

4. Use according to any of the preceding claims, **characterised in that** the porous silicon-based catalytic system is chosen from aluminosilicate, borosilicate, boro-aluminosilicate and zirconio-aluminosilicate based materials.

5. Use according to any of the preceding claims, **characterised in that** the porous silicon-based catalytic system is an aluminosilicate-based porous material.

6. Use according to any of the preceding claims, **characterised in that** the porous silicon-based catalytic system is an aluminosilicate-based porous material having a Si/Al molar ratio of between about 5 and about 40, preferably about 10 and about 20.

7. Use according to any of the preceding claims, **characterised in that** the porous silicon-based catalytic system is an aluminosilicate-based porous material having a Si/Al molar ratio of about 15.

8. Use according to any of the preceding claims, **characterised in that** the porous silicon-based catalytic system has an acidity level of between about 300 µmol/g and about 500 µmol/g.

9. Use according to any of the preceding claims, **characterised in that** the catalytic system comprises an aluminosilicate-based porous catalytic support, prepared with a non-ionic surface-active agent, and optionally at least one catalytic material with one or more of the following characteristics taken alone or in combination:
- the Si/Al molar ratio is comprised between about 5 and about 40, preferably about 10 and about 35;
- the average diameter of the pores has a value from about 1 nm to about 5 nm;
- the catalytic material optionally comprises one or more metals chosen from platinum and rhodium, alone or in mixtures, in an overall amount of between 0.05 % and 5 % by weight, and more preferably between 0.1 % and 2 % by weight of the catalytic support.

10. Use according to any of the preceding claims, **characterised in that** the catalytic system is an aluminosilicate-based porous material prepared from at least one non-ionic surface-active agent and having a Si/Al molar ratio of 15.

11. Use according to any of claims 1 to 10, **characterised in that** the porous catalytic system is substantially free from further catalytic metal.

12. Use according to any of claims 1 to 10, **characterised in that** the porous catalytic system further comprises one or more catalytic metals chosen from groups 8, 9 and 10 of the periodic classification of the elements.

13. Use according to claim 12, **characterised in that** the porous catalytic system further comprises one or more catalytic metals chosen from nickel, rhodium, and platinum.

14. Use according to any of claims 11 or 12, **characterised in that** the porous catalytic system further comprises one or more metals chosen from rhodium and platinum.

15. Use according to any of claims 11 to 14, **characterised in that** the amount of metal(s) is comprised between 0.01 % and 10 % by weight of the porous support, preferably between 0.05 % and 5 % by weight, and more preferably between 0.1 % and 2 % by weight.

16. Use according to any of claims 11 to 15, **characterised in that** the catalytic system is an aluminosilicate-based porous material prepared from at least one non-ionic surface-active agent and having a Si/Al molar ratio of 15 and comprising 0.2 % of rhodium.

17. Use according to any of claims 11 to 15, **characterised in that** the catalytic system is an aluminosilicate-based porous material prepared from at least one non-ionic surface-active agent and having a Si/Al molar ratio of 15 and comprising 0.2 % of platinum.

18. Use according to any of claims 11 to 15, **characterised in that** the catalytic system is an aluminosilicate-based porous material prepared from at least one non-ionic surface-active agent and having a Si/Al molar ratio of 15 and comprising 0.2 % by weight of a mixture rhodium/platinum in a 3/1 molar ratio.

19. Use according to any of the preceding claims, **characterised in that** said light olefin feedstock comprises alkenes or mixtures of alkenes, in all proportions, chosen from among C₂-C₆ alkenes or any olefin-comprising hydrocarbon mixtures.

20. Porous silicon-based catalytic system substantially free from catalytic metal, and having an average pore diameter comprised between about 1 nm and about 5 nm, an acidity level of between about 150 µmol/g and about 650 µmol/g, and prepared from at least one hydrolysable silicon-based compound, or other source of silicon, and at least one non-ionic surface active agent.

21. Catalytic system according to claim 20 consisting essentially of aluminosilicates, borosilicates, zirconio-aluminosilicates or boro-aluminosilicates.

22. Catalytic system according to any of claim 20 or 21, consisting essentially of aluminosilicate, and having one or more of the following characteristics taken alone or in combination:
a. the average pore diameter is comprised between about 1 nm and about 5 nm;
b. the acidity level is comprised between about 300 µmol/g and about 500 µmol/g;
c. the Si/Al molar ratio is of about 15;
d. the preparation of which involves at least one hydrolysable silicon-based compound, or other source of silicon, and at least one non-ionic surface active agent.

23. Catalytic system according to any of claims 20 to 22, consisting essentially of an aluminosilicate having a Si/Al molar ratio comprised between about 5 and about 40, preferably about 10 and about 20.

24. Catalytic system according to claim 23 wherein the Si/Al molar ratio is about 15.

25. Process for the conversion of a light olefin feedstock into oligomer paraffins, having from about 10 to about 20 carbon atoms, **characterised in that** it comprises the following reaction steps:
a) said olefin feedstock is contacted with a porous silicon-based catalytic system having an average pore diameter of between about 1 nm and about 5 nm and an acidity level of between about 150 µmol/g and about 650 µmol/g, and prepared from at least one hydrolysable silicon-based compound, or other source of silicon, and at least one non-ionic surface active agent;
b) the reaction is run at a temperature ranging from about 100 °C to about 350 °C, and at a pressure comprised between about 0.5 MPa and about 7 MPa;
c) the final products are removed from the reaction medium and collected.

26. Process according to claim 25, for the conversion of a light olefin feedstock into oligomer paraffins belonging to the diesel fractions (boiling point 180-350 °C).

27. Process according to any of claims 25 or 26, **characterised in that** the porous silicon-based catalytic system is chosen from aluminosilicate, zirconiosilicate, borosilicate, phosphosilicate, phosphoaluminosilicate, boro-aluminosilicate and zirconio-aluminosilicate based materials.

28. Process according to any of claims 25 to 27, **characterised in that** the porous silicon-based catalytic system is chosen from aluminosilicate, borosilicate, aluminoborosilicate and aluminozirconiosilicate based materials.

29. Process according to any of claims 25 to 28, **characterised in that** the porous silicon-based catalytic system is an aluminosilicate-based porous material.

30. Process according to any of claims 25 to 29, **characterised in that** the porous silicon-based catalytic system is an aluminosilicate-based porous material having a Si/Al molar ratio of between about 5 and about 40, preferably about 10 and about 20.

31. Process according to any of claims 25 to 30, **characterised in that** the porous silicon-based catalytic system is an aluminosilicate-based porous material having a Si/Al molar ratio of about 15.

32. Process according to any of claims 25 to 30, **characterised in that** the porous silicon-based catalytic system has an acidity level comprised between about 300 µmol/g and about 500 µmol/g.

33. Process according to any of claims 25 to 32, **characterised in that** the catalytic system comprises an aluminosilicate-based porous catalytic support, prepared with a non-ionic surface-active agent, and optionally at least one catalytic material with one or more of the following characteristics taken alone or in combination:
- the Si/Al molar ratio is comprised between about 5 and about 40, preferably about 10 and about 35;
- the average diameter of the pores has a value from about 1 nm to about 5 nm;
- the catalytic material optionally comprises one or more metals chosen from platinum and rhodium, alone or in mixtures, in an overall amount of between 0.05 % and 5 % by weight, and more preferably between 0.1 % and 2 % by weight of the catalytic support;
- the acidity level is comprised between about 300 µmol/g and about 500 µmol/g.

34. Process according to any of claims 25 to 33, **characterised in that** the catalytic system is an aluminosilicate-based porous material prepared from at least one non-ionic surface-active agent and having a Si/Al molar ratio of 15.

35. Process according to any of claims 25 to 34, **characterised in that** the porous catalytic system is substantially free from further catalytic metal.

36. Process according to any of claims 25 to 34, **characterised in that** the porous catalytic system further comprises one or more catalytic metals chosen from groups 8, 9 and 10 of the periodic classification of the elements.

37. Process according to claim 36, **characterised in that** the porous catalytic system further comprises one or more catalytic metals chosen from nickel, rhodium, and platinum.

38. Process according to any of claims 36 or 37, **characterised in that** the porous catalytic system further comprises one or more metals chosen from rhodium and platinum.

39. Process according to any of claims 36 to 38, **characterised in that** the amount of metal(s) is comprised between 0.01 % and 10 % by weight of the porous support, preferably between 0.05 % and 5 % by weight, and more preferably between 0.1 % and 2 % by weight.

40. Process according to any of claims 36 to 39, **characterised in that** the catalytic system is an aluminosilicate-based porous material prepared from at least one non-ionic surface-active agent and having a Si/Al molar ratio of 15 and comprising 0.2 % of rhodium.

41. Process according to any of claims 36 to 39, **characterised in that** the catalytic system is an aluminosilicate-based porous material prepared from at least one non-ionic surface-active agent and having a Si/Al molar ratio of 15 and comprising 0.2 % of platinum.

42. Process according to any of claims 36 to 39, **characterised in that** the catalytic system is an aluminosilicate-based porous material prepared from at least one non-ionic surface-active agent and having a Si/Al molar ratio of 15 and comprising 0.2 % by weight of a mixture rhodium/platinum in a 3/1 molar ratio.

43. Process according to any of claims 25 to 42, **characterised in that** said light olefin feedstock comprises alkenes or mixtures of alkenes, in all proportions, chosen from among C₂-C₆ alkenes or any olefin-comprising hydrocarbon mixtures.

44. Process according to claim 43, **characterised in that** said alkenes or mixtures of alkenes are chosen from among ethene, propene, butenes (i.e. all linear or branched butene isomers: 1-butene, 2-butene, 2-methylpropene), pentenes (all linear or branched isomers) and hexenes (all linear or branched isomers).

45. Process according to any of claims 43 or 44, **characterised in that** said alkenes or mixtures of alkenes are chosen from among C₄ and C₅ alkenes.

46. Process according to any of claims 25 to 45, **characterised in that** the reaction temperature is comprised between 100 °C and 350 °C, more preferably between about 200 °C and about 250 °C.

47. Process according to any of claims 25 to 46, **characterised in that** the reaction pressure is comprised between 0.5 MPa and 7 MPa, preferably about 5 MPa.

48. Diesel fractions compounds substantially obtained by the process according to any of claims 25 to 47.
